# EUROPEAN PATENT APPLICATION

(11) **EP 4 817 747 A1**
(43) Date of publication of application: **07.10.2026**
(21) Application number: 25877785.3
(22) Date of filing: 12.08.2025
(51) Int. Cl.: B05C 1/08, H01M 50/403

(54) **SEPARATOR COATING ROLLER CAPABLE OF THICKNESS ADJUSTMENT AND SEPARATOR MANUFACTURING APPARATUS COMPRISING SAME**

(30) Priority: 07.10.2024 KR 20240136042
(71) Applicant: LG Energy Solution, Ltd., Seoul 07335 (KR)
(72) Inventor: LEE, Byeong Kyu, Daejeon 34122 (KR); LEE, Seung Hyun, Daejeon 34122 (KR); KIM, Yu Bae, Daejeon 34122 (KR); KA, Kyung Ryun, Daejeon 34122 (KR)
(74) Representative: Hoffmann Eitle
(86) International application number: PCT/KR2025/012165
(87) International publication number: WO 2026/079625

(57) **Abstract**

A separator coating roller may include a coating bar configured to coat a coating layer on a separator substrate, and an eccentric section coupled to the coating bar. The eccentric section may be configured to rotate the coating bar and adjust an eccentricity of the coating bar.

## Description

### Technical Field

The present disclosure relates to a separator coating roller for manufacturing a separator for a secondary battery, and more particularly, to a separator coating roller capable of adjusting a coating thickness and a separator manufacturing device including the same.

### Background Art

Recently, interests in energy storage technologies are increasing. As application fields expand to mobile phones, camcorders, laptops and even electric vehicles, efforts for research and development of electrochemical devices are becoming increasingly concrete.

Electrochemical devices are drawing a lot of attention in this regard. In particular, the development of rechargeable secondary batteries is the focus of attention. Recently, in developing secondary batteries, research and development is actively being conducted on the design of new electrodes and batteries to improve capacity density and specific energy.

Among secondary batteries currently in use, lithium secondary batteries developed in the early 1990s are attracting attention due to their advantages of higher operating voltage and significantly larger energy density than conventional batteries such as Ni-MH, Ni-Cd and sulfuric acid-lead batteries that use aqueous electrolytes.

A separator used in lithium secondary batteries plays the role of physically blocking the contact between a cathode and an anode and electrically insulating the cathode and the anode while allowing the movement of lithium ions. In particular, the separator is known to have a great influence on the characteristics and safety of the battery in that the separator is responsible for an insulation maintaining function to prevent the internal short-circuiting of the battery.

Such a separator mainly uses a porous polymer substrate, but the porous polymer substrate has a problem in that the separator may undergo heat shrinkage at high temperature, causing an internal short circuit between the cathode and the anode. In order to solve this problem, an organic/inorganic porous coating layer, containing inorganic particles and a binder polymer, is applied onto the porous polymer substrate to reduce heat shrinkage.

When the thickness of the coating layer applied to the separator is constant, the movement of ions may be inefficient in specific areas of the secondary battery. This may interfere with interaction with an electrolyte and reduce the overall performance of the battery.

In addition, the secondary battery generates heat during operation, and when the thickness of the coating layer is constant, heat dissipation may be performed in an unbalanced manner, causing heat concentration. The heat concentration may cause overheating in some areas of the secondary battery, shortening the lifespan of the battery or causing safety issues over time.

Moreover, the separator with a constant thickness may not respond uniformly to mechanical stresses such as external pressure or expansion and contraction occurring inside the battery. Due to this fact, the likelihood of breakage or short circuits may increase in certain areas.

### DISCLOSURE

### Technical Problem

An object of the present disclosure is to provide a separator coating roller capable of adjusting a coating thickness and a separator manufacturing device including the same.

### Technical Solution

A separator coating roller according to an embodiment of the present disclosure may include a coating bar and an eccentric section. The coating bar may be configured to coat a coating layer on a separator substrate. The eccentric section may be coupled to the coating bar, configured to rotate the coating bar, and configured to adjust an eccentricity of the coating bar.

In the separator coating roller according to the embodiment of the present disclosure, the eccentric section may include an eccentric housing and an adjustment bolt. The eccentric housing may be located on opposing ends of the coating bar, the eccentric housing may have a hollow structure and an insertion hole, the insertion hole being located on a circumferential outer surface of the eccentric housing and extending to a hollow space of the hollow structure. The adjustment bolt may be configured to be inserted into the insertion hole to an adjustable insertion depth. The adjustment bolt may be configured to limit a movement of the coating bar in the hollow space or eccentrically position the coating bar in the hollow space.

In the separator coating roller according to the embodiment of the present disclosure, the insertion hole may include at least two pairs of insertion holes, the insertion holes of each pair of insertion holes facing each other. The adjustment bolt may include first adjustment bolts being configured to limit the movement of the coating bar by the first adjustment bolts being inserted into a first pair of insertion holes of the at least two pairs of insertion holes, respectively. The adjustment bolt may further include second adjustment bolts being configured to eccentrically position the coating bar by the second adjustment bolts being inserted into a second pair of insertion holes of the at least two pairs of insertion holes, respectively.

In the separator coating roller according to the embodiment of the present disclosure, the first adjustment bolts and the second adjustment bolts may have threaded portions with different diameters from each other according to respective locations of the first pair of insertion holes and the second pair of insertion holes.

In the separator coating roller according to the embodiment of the present disclosure, the first adjustment bolts and the second adjustment bolts may have different lengths according to respective locations of the first pair of insertion holes and the second pair of insertion holes.

In the separator coating roller according to the embodiment of the present disclosure, the insertion hole may include a pair of insertion holes facing each other. The eccentric section may include a pair of side support members protruding in the hollow space to face each other. The pair of side support members may be configured to limit the movement of the coating bar. The adjustment bolt may include a pair of adjustment bolts. The pair of adjustment bolts may be configured to eccentrically position the coating bar upon insertion into the pair of insertion holes, respectively.

In the separator coating roller according to the embodiment of the present disclosure, the insertion hole may include a pair of insertion holes facing each other. The hollow space of the eccentric section may include eccentric guides being planar surfaces facing each other and configured to limit the movement of the coating bar to a straight direction in the hollow space. The adjustment bolt may include a pair of adjustment bolts. The pair of adjustment bolts may be configured to eccentrically position the coating bar upon insertion into the pair of insertion holes, respectively.

In the separator coating roller according to the embodiment of the present disclosure, the insertion hole may include a pair of insertion holes facing each other. The adjustment bolt may be configured to eccentrically position the coating bar upon insertion into a first insertion hole of the pair of insertion holes. A second insertion hole of the pair of insertion holes may have a compression spring inserted therein, the compression spring being opposite to the adjustment bolt.

In the separator coating roller according to the embodiment of the present disclosure, the eccentric section may include a compression spring facing the insertion hole, and a pair of side support members protruding in the hollow space, facing each other, and being configured to limit the movement of the coating bar. The adjustment bolt is configured to eccentrically position the coating bar by being inserted into the insertion hole.

In the separator coating roller according to the embodiment of the present disclosure, the eccentric section may include a compression spring facing the insertion hole. The hollow space of the eccentric section may include eccentric guides. The eccentric guides may be planar surfaces facing each other and may be configured to limit the movement of the coating bar to a straight direction in the hollow space. The adjustment bolt may be configured to eccentrically position the coating bar by being inserted into the insertion hole.

In the separator coating roller according to the embodiment of the present disclosure, the coating bar may include a wear-preventing section located at a position configured to be contacted by the adjustment bolt.

A separator manufacturing device according to an embodiment of the present disclosure comprises a substrate supplier configured to supply a separator substrate, a coating solution receiving section configured to receive a separator coating solution, and a coating roller configured to coat a coating layer on the separator substrate by using the separator coating solution. The coating roller may include a coating bar and an eccentric section. The coating bar may be located along a width direction of the separator substrate, the coating bar may be configured to apply the separator coating solution to the separator substrate. The eccentric section may be coupled to the coating bar, configured to rotate the coating bar, and configured to adjust an eccentricity of the coating bar.

In the separator manufacturing device according to the embodiment of the present disclosure, the eccentric section may include an eccentric housing and an adjustment bolt. The eccentric housing may be located on opposing sides in the width direction of the separator substrate. The eccentric housing may have a hollow structure and an insertion hole. The insertion hole may be located on a circumferential outer surface of the eccentric housing and extend to a hollow space of the hollow structure. The adjustment bolt may be configured to be inserted into the insertion hole to an adjustable insertion depth. The adjustment bolt may be configured to limit a movement of the coating bar in the hollow space or eccentrically position the coating bar in the hollow space.

The separator manufacturing device according to the embodiment of the present disclosure may further include kiss rollers installed in front of and behind, respectively, the coating roller. The kiss rollers may be configured to press the separator substrate toward the coating roller.

In the separator manufacturing device according to the embodiment of the present disclosure, a rotation speed of the coating bar may be determined depending on the eccentricity of the coating bar.

In the separator manufacturing device according to the embodiment of the present disclosure, when the coating bar rotates for one cycle, the rotation speed of the coating bar may be determined depending on a thickness of the coating layer.

In the separator manufacturing device according to the embodiment of the present disclosure, the substrate supplier may include a roller. The roller may have a rotation speed configured to be variable in conjunction with the rotation speed of the coating bar.

In the separator manufacturing device according to the embodiment of the present disclosure, the coating roller may be located on upper and lower surfaces of the separator substrate to form the coating layer on both the upper and lower surfaces of the separator substrate.

In the separator manufacturing device according to the embodiment of the present disclosure, the coating bar may have a cylindrical shape. The coating bar may be supplied with the separator coating solution on a circumferential outer surface of the coating bar. The coating bar may be configured to apply the separator coating solution to the separator substrate.

In the separator manufacturing device according to the embodiment of the present disclosure, the coating solution receiving section may include a discharge port configured to continuously supply and discharge the separator coating solution. The discharge port may have a diameter larger than a maximum eccentric diameter of the coating bar.

### Advantageous Effects

According to the present disclosure, the thickness of a coating layer of a separator of a secondary battery may be appropriately adjusted depending on an area, whereby it is possible to optimize the performance of and maintain the safety of the secondary battery.

### Brief Description of Drawings

Fig. 1 is a view illustrating a separator manufacturing device according to an embodiment of the present disclosure.
Fig. 2A and Fig. 2B are cross-sectional views illustrating a coating unit according to embodiments of the present disclosure.
Fig. 3 is a perspective view illustrating a separator coating roller according to a first embodiment of the present disclosure.
Fig. 4 is a cross-sectional view illustrating the separator coating roller according to the first embodiment of the present disclosure.
Fig. 5 is a view when viewing the separator coating roller of Fig. 4 from the right to the left (in a direction A).
Fig. 6 is a view illustrating a separator coating roller according to a second embodiment of the present disclosure.
Fig. 7 is a perspective view illustrating a separator coating roller according to a third embodiment of the present disclosure.
Fig. 8 is a side view illustrating the separator coating roller according to the third embodiment of the present disclosure.
Fig. 9 is a perspective view illustrating a separator coating roller according to a fourth embodiment of the present disclosure.
Fig. 10 is a cross-sectional view illustrating the separator coating roller according to the fourth embodiment of the present disclosure.
Fig. 11A to Fig. 15B are views illustrating the operation process of the separator coating roller according to the embodiments of the present disclosure.
Fig. 16 and Fig. 17 are side views illustrating separators manufactured using the separator coating roller according to the embodiments of the present disclosure.

### Best Mode

The present disclosure may be modified in various ways and has various embodiments, and particular embodiments are illustrated in the drawings and will be described in detail in the detailed description. It should be understood, however, that the present disclosure is not intended to be limited to the particular embodiments but includes all modifications, equivalents and alternatives falling within the spirit and scope of the present disclosure.

The terms used in the present disclosure are used only to describe particular embodiments and are not intended to limit the present disclosure. Singular expressions include plural expressions, unless the context clearly indicates otherwise. In the present disclosure, it will be further understood that the terms "include," "have" and the like are to specify the presence of features, numbers, steps, operations, elements, parts or combinations thereof stated in the specification, but do not preclude in advance the possibility of the presence or addition of one or more of other features, numbers, steps, operations, elements, parts or combinations thereof.

Hereinafter, preferred embodiments of the present disclosure will be described in detail with reference to the attached drawings. It should be noted that in the attached drawings, the same components are represented by the same symbols wherever possible. In addition, detailed descriptions of known functions and configurations that may obscure the gist of the present disclosure will be omitted. For the same reason, some components in the attached drawings are exaggerated, omitted or schematically illustrated.

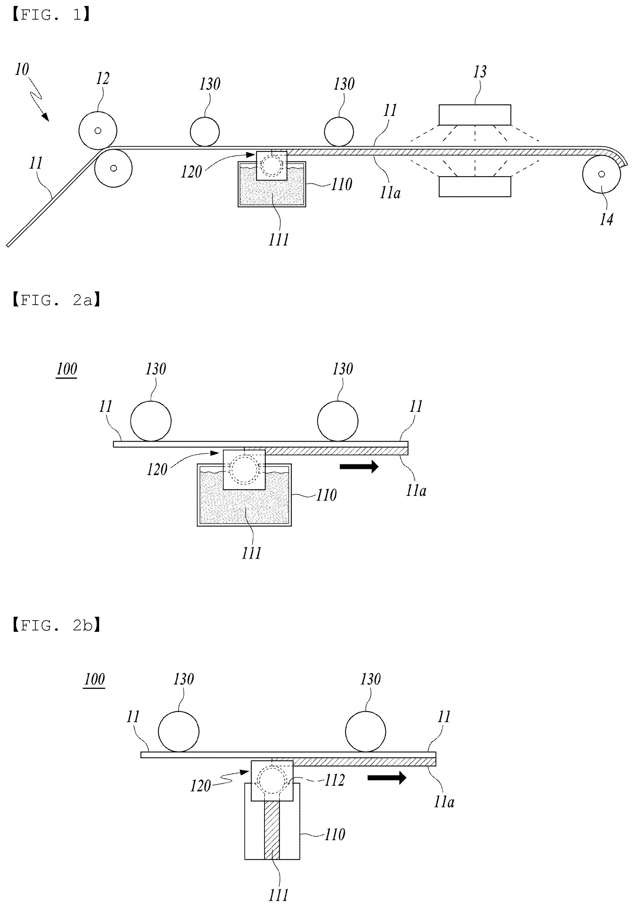

Fig. 1 is a view illustrating a separator manufacturing device according to an embodiment of the present disclosure.

Referring to Fig. 1, a separator manufacturing device 10 according to an embodiment of the present disclosure may include a substrate supply unit 12, a coating unit 100, a drying unit 13, and a winding unit 14.

The substrate supply unit 12 is composed of a pair of rollers and conveys and supplies a separator substrate 11 to the coating unit 100. The separator substrate 11 may be manufactured by using, for example, a polyolefin-based resin as a base resin or by using a nonwoven fabric, but is not particularly limited thereto.

Examples of the polyolefin-based resin may include polyethylene, polypropylene and polypentene, and the polyolefin-based resin may include one or more of them. A porous separator, i.e., a separator with a large number of pores, manufactured using the polyolefin-based resin as a base resin may provide a shutdown function at an appropriate temperature.

In addition to a polyolefin-based nonwoven fabric, the nonwoven fabric may be a nonwoven fabric formed using, singly or in mixture, polymers such as polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalene, and the like. The structure of the nonwoven fabric may be a spunbond nonwoven fabric or meltblown nonwoven fabric composed of long fibers.

A separator substrate may be formed by mixing different polyolefin-based resins or may be formed into a multilayer structure using different polyolefin-based resins.

The weight-average molecular weight of the polyolefin-based resin may be 500,000 or more and 1.5 million or less. By controlling the weight-average molecular weight of the polyolefin-based resin within the above-described range, the compression resistance of the separator may be improved. Furthermore, when forming the separator by mixing different polyolefin-based resins or when forming the separator into a multilayer structure using different polyolefin-based resins, the weight-average molecular weight of the polyolefin-based resins may be calculated by summing weight-average molecular weights according to the content ratios of the respective polyolefin-based resins.

The coating unit 100 coats a coating layer on the separator substrate 11, which is a porous polymer substrate. The coating layer may include inorganic particles and a binder.

The coating layer may include a plurality of pores. Specifically, the coating layer may be a porous coating layer. More specifically, the coating layer may be a porous coating layer including a plurality of pores therein. As the coating layer includes a plurality of pores as described above, the coating layer may allow lithium ions to pass and a current to flow therethrough while physically blocking an anode and a cathode.

The coating layer may be formed as the inorganic particles are bound by the binder and are integrated in the coating layer. The pores in the coating layer may originate from an interstitial volume, which is an empty space between the inorganic particles.

The coating layer may be formed to a thickness of 1 µm to 20 *µ*m on either side of the separator substrate, but is not particularly limited thereto. The thickness of the coating layer may be adjusted to an appropriate range by those skilled in the art in terms of heat resistance or electrical resistance.

In the present disclosure, the coating unit 100 is configured to be able to adjust the thickness of a coating layer 11a (see Fig. 2A and Fig. 2B), which will be described later with reference to Fig. 2A and subsequent drawings. The separator substrate 11 and the coating layer 11a constitute the separator.

The drying unit 13 may dry a solvent in a slurry contained in the coating layer coated by the coating unit 100 to form the separator. A method for drying a slurry for forming a coating layer is not particularly limited. For example, the separator substrate 11 coated with the coating layer 11a may be dried using a dryer such as an oven to dry the coating layer formed on at least one surface of the separator substrate 11.

The winding unit 14 winds the separator that is dried in the drying unit 13. As the winding unit 14, a member that is commonly used in the art and is capable of winding a separator may be applied without being particularly limited. The wound separator is then stacked between an anode and a cathode in a subsequent process to manufacture a secondary battery.

Fig. 2A and Fig. 2B are cross-sectional views illustrating the coating unit 100 according to embodiments of the present disclosure.

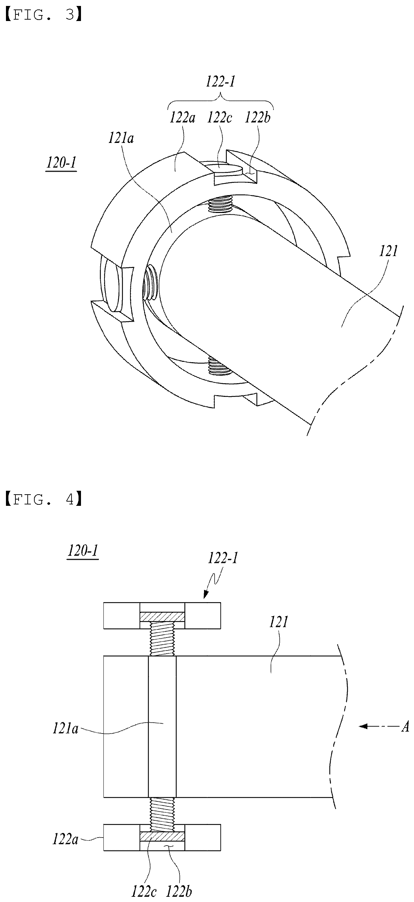

Referring to Fig. 2A, the coating unit 100 according to an embodiment of the present disclosure may include a coating solution receiving section 110 and a coating roller 120 (120-1 to 120-4, see Fig. 3 to Fig. 10). Optionally, kiss rollers 130 may be further included.

The coating solution receiving section 110 may be a container that receives therein a separator coating solution 111 and supplies the separator coating solution. The coating roller 120 may be supplied with the separator coating solution on the circumferential outer surface thereof (specifically, the circumferential outer surface of a coating bar 121 (see Fig. 3)), and may apply the separator coating solution to at least one surface of the separator substrate 11 to form the coating layer 11a.

Alternatively, referring to Fig. 2B, a discharge port 112 for discharging the separator coating solution 111 may be formed at the upper end of the coating solution receiving section 110, and the separator coating solution may be continuously supplied to the coating roller 120 through the discharge port 112. The coating roller 120 may be disposed adjacent to the discharge port 112, and may apply the coating solution to at least any one surface of the separator substrate 11 to form the coating layer 11a.

The coating roller 120 is configured to be able to adjust the thickness of the coating layer 11a using the eccentric coating bar 121. Because the coating roller 120 includes the coating bar 121 that eccentrically rotates, it is preferable that the discharge port 112 has a diameter larger than the maximum eccentric diameter of the coating bar 121. The "maximum eccentric diameter of the coating bar 121" means the rotation radius of the eccentric coating bar 121 when the coating bar 121 is moved to the maximum using adjustment bolts 122c (see Fig. 3).

The kiss rollers 130 are installed in front and rear, respectively, of the coating roller 120. The kiss rollers 130 come into contact with the separator substrate 11 with small pressure to press the separator substrate 11 toward the coating roller 120, thereby suppressing vibration caused by the eccentric coating bar 121 and assisting the coating roller 120 in applying the coating solution.

Fig. 2A and Fig. 2B illustrate as an example that the coating roller 120 coats the lower surface of the separator substrate 11, but the present disclosure is not limited thereto. The coating roller 120 may be disposed on the upper and lower surfaces of the separator substrate 11 to coat both the upper and lower surfaces of the separator substrate 11.

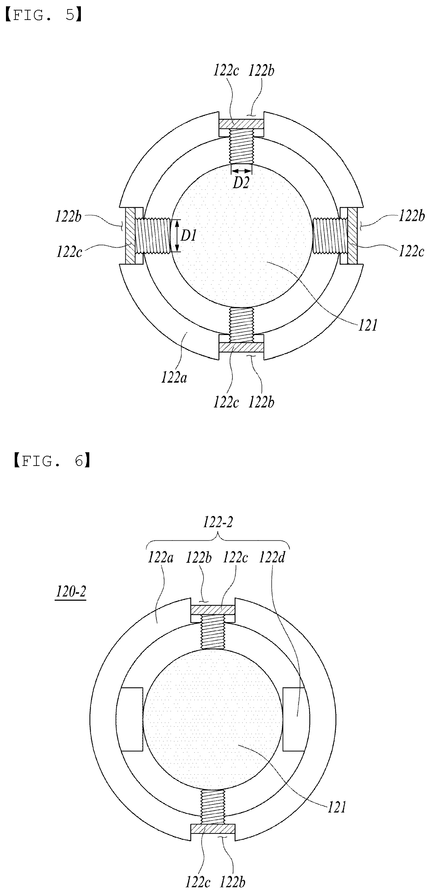

Fig. 3 is a perspective view illustrating a separator coating roller according to a first embodiment of the present disclosure, Fig. 4 is a cross-sectional view illustrating the separator coating roller according to the first embodiment of the present disclosure, and Fig. 5 is a view when viewing the separator coating roller of Fig. 4 from the right to the left (in a direction A).

Referring to Fig. 3 to Fig. 5, the separator coating roller 120-1 according to the first embodiment of the present disclosure may include the coating bar 121 and an eccentric section 122-1.

The coating bar 121 is a rod member that is disposed to extend in the widthwise direction of the separator substrate 11 perpendicular to the supply direction of the separator substrate 11. The coating bar 121 may adjust the thickness of the coating layer 11a while rotating about an eccentric axis eccentrically formed by the eccentric section 122-1.

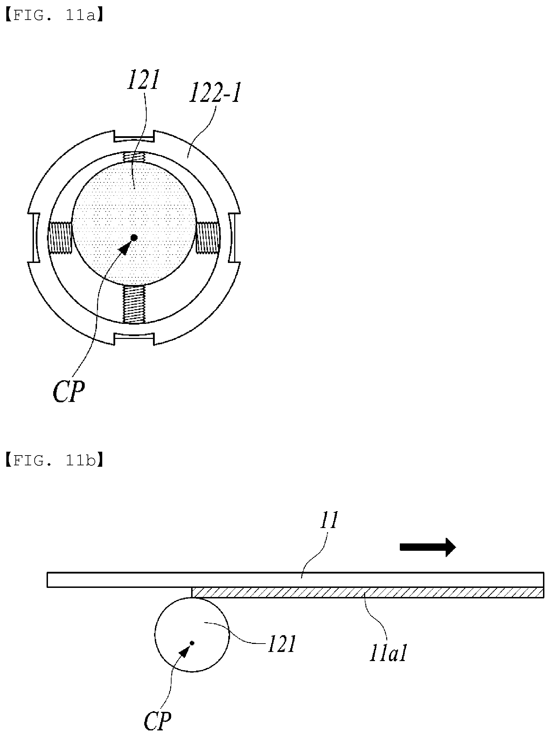

The eccentric section 122-1 may move the coating bar 121 to adjust the eccentricity of the coating bar 121. Eccentricity means the distance between the geometric center of the coating bar 121 and the rotational center (see CP in Fig. 11A) of the coating bar 121. Specifically, the eccentric section 122-1 may include an eccentric housing 122a, an insertion hole 122b, and an adjustment bolt 122c.

The eccentric housing 122a is formed in a cylindrical shape on each of both ends of the coating bar 121, and the interior of the eccentric housing 122a is formed into a hollow structure so that the coating bar 121 may be received in the hollow structure and the adjustment bolts 122c may move into the hollow structure. Each of both ends of the coating bar 121 may terminate within the eccentric housing 122a or may penetrate the eccentric housing 122a. The eccentric housing 122a is connected to a rotary motor (not illustrated), and may be rotated by the rotary motor. As a result, the coating bar 121 may rotate in an eccentric state.

The insertion hole 122b may be formed to be recessed on the circumferential outer surface of the eccentric housing 122a. The insertion hole 122b may penetrate from the circumferential outer surface of the eccentric housing 122a to the hollow space of the eccentric housing 122a. The adjustment bolt 122c is inserted into the insertion hole 122b. The adjustment bolt 122c may be adjusted in its insertion depth by being rotated in one direction or the other direction.

A plurality of insertion holes 122b may be formed at regular intervals on the circumferential outer surface of the eccentric housing 122a. The insertion holes 122b may be formed as two or more pairs of insertion holes 122b with each pair of insertion holes 122b facing each other. Adjustment bolts inserted into any one pair of insertion holes among the plurality of pairs of insertion holes may fix the coating bar 121, and adjustment bolts inserted into any one pair of insertion holes among the remaining pairs of insertion holes may eccentrically move the coating bar 121.

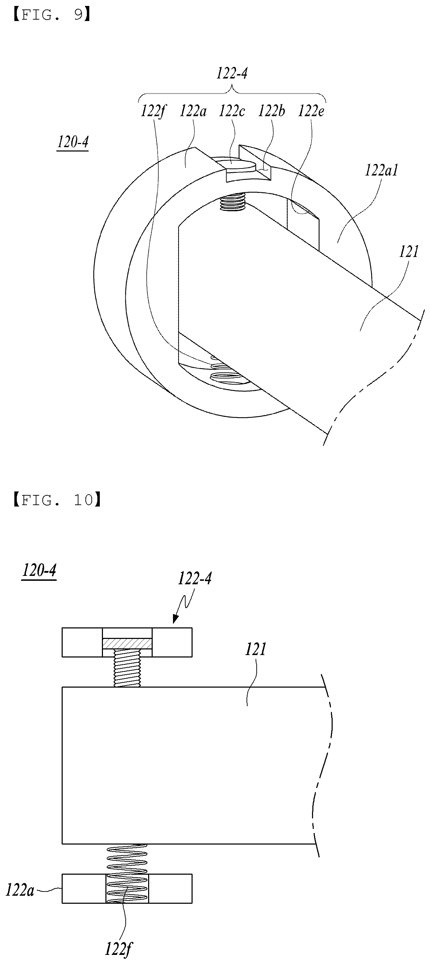

Depending on a design, there may be one insertion hole 122b. This will be described later with reference to Fig. 9 and Fig. 10. In this first embodiment, an example in which two pairs of insertion holes 122b are formed is illustrated.

Adjustment bolts 122c are inserted into the insertion holes 122b. Insertion depths may be adjusted in a manner of tightening and loosening a plurality of adjustment bolts 122c to eccentrically position the coating bar 121.

When there are four adjustment bolts 122c, upper and lower adjustment bolts 122c may eccentrically adjust the positions of the upper and lower sides of the coating bar 121, and left and right adjustment bolts 122c may fix the left and right sides of the coating bar 121 to firmly fix the coating bar 121.

Referring to Fig. 5, the diameters of the threaded portions of the plurality of adjustment bolts 122c may be different depending on positions where the plurality of adjustment bolts 122c are inserted. Specifically, it is sufficient that adjustment bolts inserted up and down are moved upwards and downwards to eccentrically move the coating bar 121. However, because adjustment bolts inserted left and right should support portions of the circumferential outer surface of the eccentric coating bar 121, a diameter D1 of the threaded portions of the adjustment bolts inserted left and right may be formed to be larger than a diameter D2 of the threaded portions of the adjustment bolts inserted up and down. The diameter of a threaded portion means the diameter of the body of a bolt excluding a head formed at the top of the bolt.

In addition, the lengths of the threaded portions of the plurality of adjustment bolts 122c may be different depending on positions where the plurality of adjustment bolts 122c are inserted. Because the adjustment bolts inserted up and down are to adjust the degree of eccentricity by moving the coating bar 121 upwards and downwards and the adjustment bolts inserted left and right are to support the circumferential outer surface of the coating bar 121, a length of the adjustment bolts inserted up and down may be larger than that of the adjustment bolts inserted left and right.

In addition, a wear-preventing section 121a may be formed in a ring shape on the surface of the coating bar 121 at a position where the coating bar 121 and the adjustment bolts 122c come into contact with each other, to prevent the surface of the coating bar 121 from being worn and damaged by the adjustment bolts 122c. Even in second to fourth embodiments to be described below, the wear-preventing section 121a may be formed, but will be omitted for the sake of convenience in explanation.

Next, a separator coating roller according to a second embodiment of the present disclosure will be described with reference to Fig. 6. Fig. 6 is a view illustrating a separator coating roller according to a second embodiment of the present disclosure, as another embodiment of the separator coating roller of Fig. 4 viewed in the direction A.

Referring to Fig. 6, the separator coating roller 120-2 according to the second embodiment of the present disclosure may include the coating bar 121 and an eccentric section 122-2. Since the coating bar 121 is substantially the same as that of the first embodiment described above, a repeated description will be omitted.

The eccentric section 122-2 may include an eccentric housing 122a, an insertion hole 122b, an adjustment bolt 122c, and a side support member 122d.

With regard to the eccentric housing 122a, the insertion hole 122b and the adjustment bolt 122c, in the present embodiment, since only two adjustment bolts 122c are disposed up and down, the only difference is that two insertion holes 122b are formed to be recessed on the circumferential outer surface of the eccentric housing 122a, and the rest are substantially the same as those of the first embodiment described above.

The side support member 122d may be provided as a pair of plate members that are formed to protrude and face each other in the hollow space of the eccentric housing 122a. A pair of side support members 122d may be formed to be spaced apart by the diameter of the coating bar 121.

The pair of side support members 122d may support both sides of the coating bar 121 instead of the left and right adjustment bolts of the first embodiment, thereby limiting the leftward and rightward movement of the coating bar 121.

Because each of the side support members 122d has a support surface wider than that of the adjustment bolt, the side support members 122d may support both sides of the coating bar 121 more firmly.

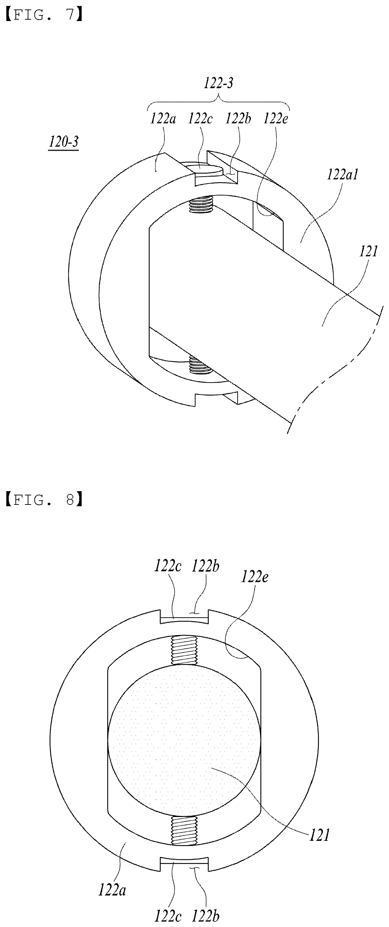

Next, a separator coating roller according to a third embodiment of the present disclosure will be described with reference to Fig. 7 and Fig. 8. Fig. 7 is a perspective view illustrating a separator coating roller according to a third embodiment of the present disclosure, and Fig. 8 is a side view illustrating the separator coating roller according to the third embodiment of the present disclosure.

Referring to Fig. 7 and Fig. 8, the separator coating roller 120-3 according to the third embodiment of the present disclosure may include the coating bar 121 and an eccentric section 122-3. Since the coating bar 121 is substantially the same as that of the first embodiment described above, a repeated description will be omitted.

The eccentric section 122-3 may include an eccentric housing 122a, an insertion hole 122b, an adjustment bolt 122c, and an eccentric guide 122e.

With regard to the eccentric housing 122a, the insertion hole 122b and the adjustment bolt 122c, in the present embodiment, since only two adjustment bolts 122c are disposed up and down, the only difference is that two insertion holes 122b are formed to be recessed on the circumferential outer surface of the eccentric housing 122a, and the rest are substantially the same as those of the first embodiment described above.

In the present embodiment, the eccentric housing 122a has an inner surface 122a1, and the eccentric guide 122e may be formed on the inner surface 122a1 of the eccentric housing 122a. The inner surface 122a1 may be a pair of facing planes that are formed parallel to each other in the hollow space of the eccentric housing 122a.

The size of a separation width W of the pair of facing planes that constitute the eccentric guide 122e may be formed to be substantially the same as the diameter of the coating bar 121.

The adjustment bolts 122c disposed on and under the coating bar 121 may eccentrically move the coating bar 121 upwards and downwards, and the leftward and rightward movement of the coating bar 121 may be limited by the eccentric guide 122e. That is to say, the eccentric guide 122e may support both sides of the coating bar 121 more firmly by replacing the function of the left and right adjustment bolts 122c.

Next, a separator coating roller according to a fourth embodiment of the present disclosure will be described with reference to Fig. 9 and Fig. 10. Fig. 9 is a perspective view illustrating a separator coating roller according to a fourth embodiment of the present disclosure, and Fig. 10 is a cross-sectional view illustrating the separator coating roller according to the fourth embodiment of the present disclosure.

Referring to Fig. 9 and Fig. 10, the separator coating roller 120-4 according to the fourth embodiment of the present disclosure may include the coating bar 121 and an eccentric section 122-4. Since the coating bar 121 is substantially the same as that of the first embodiment described above, a repeated description will be omitted.

The eccentric section 122-4 may include an eccentric housing 122a, an insertion hole 122b, an adjustment bolt 122c, an eccentric guide 122e, and a compression spring 122f. Depending on a design, the side support member 122d may replace the eccentric guide 122e.

With regard to the eccentric housing 122a, the insertion hole 122b and the adjustment bolt 122c, in the present embodiment, since only one adjustment bolt 122c is disposed on or under the coating bar 121, the only difference is that one insertion hole 122b is formed to be recessed on the circumferential outer surface of the eccentric housing 122a, and the rest are substantially the same as those of the first embodiment described above.

In addition, since the eccentric guide 122e is substantially the same as that of the third embodiment described above and the side support member 122d is substantially the same as that of the second embodiment described above, repeated descriptions will be omitted.

In the present embodiment, one adjustment bolt 122c is inserted into the insertion hole 122b. An insertion depth may be adjusted in a manner of tightening and loosening the one adjustment bolt 122c to eccentrically adjust the position of the coating bar 121. The compression spring 122f is installed to face the adjustment bolt 122c, and when one adjustment bolt 122c presses the coating bar 121, a force is applied by the compression spring 122f in a direction opposite to a pressing direction to firmly fix the coating bar 121.

Alternatively, a pair of insertion holes 122b may be formed to face each other, one adjustment bolt 122c may be inserted into one insertion hole 122b, and the compression spring 122f may be inserted into the other insertion hole 122b.

The one adjustment bolt 122c eccentrically adjusts the position of the coating bar 121, and the compression spring 122f firmly fixes the eccentric coating bar 121. The leftward and rightward movement of the coating bar 121 may be limited by the side support member 122d or the eccentric guide 122e.

Next, the operation process of the separator coating roller according to the embodiments of the present disclosure will be described with reference to Fig. 11A to Fig. 15B. Fig. 11A to Fig. 15B are views illustrating the operation process of the separator coating roller according to the embodiments of the present disclosure.

Fig. 11A, Fig. 12A, Fig. 13A, Fig. 14A and Fig. 15A are drawings illustrating the positions of the coating bar 121 according to the rotation of the eccentric housing 122a. Fig. 11B, Fig. 12B, Fig. 13B, Fig. 14B and Fig. 15B are drawings illustrating changes in the thickness of the applied coating layer 11a depending on the position of the coating bar 121. The symbol "cp" is the rotation center of the coating bar 121, and is referred to as the eccentric axis of the coating bar 121. Fig. 11A to Fig. 15B illustrate the coating roller of the first embodiment as an example, but the coating rollers of the second and third embodiments may also operate in substantially the same manner.

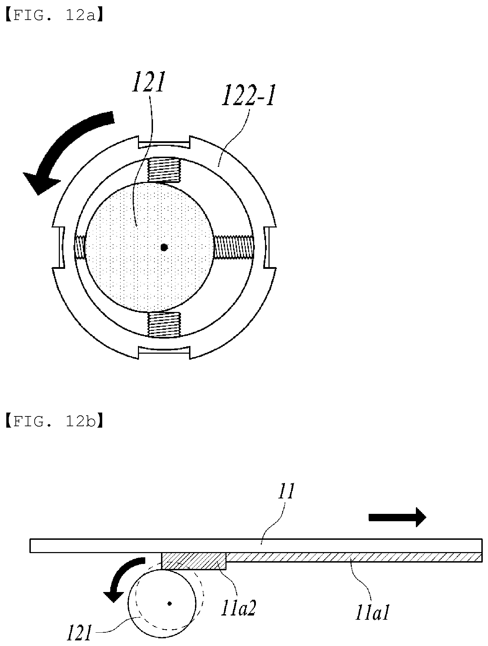

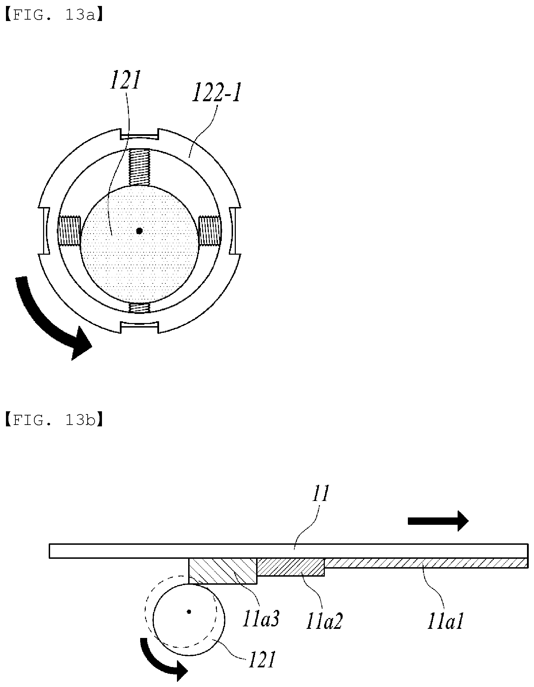

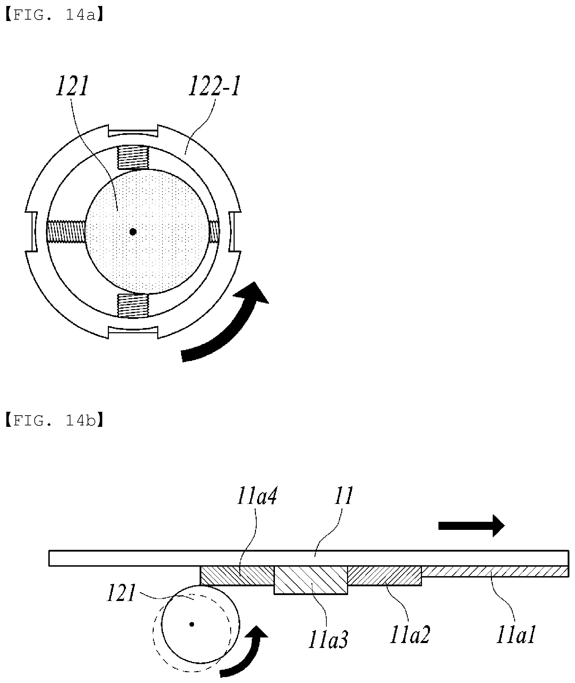

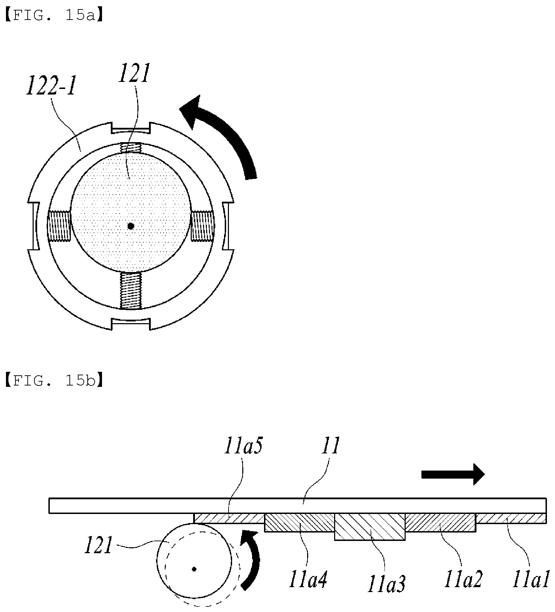

The coating bar 121 may form a coating layer 11a1 of a first thickness at a first position as illustrated in Fig. 11B, may then form a coating layer 11a2 of a second thickness at a second position as illustrated in Fig. 12B, may then form a coating layer 11a3 of a third thickness at a third position as illustrated in Fig. 13B, and may then form a coating layer 11a4 of a fourth thickness at a fourth position as illustrated in Fig. 14B. Then, as illustrated in Fig. 15B, the coating bar 121 returns to the first position and repeats the cycle of Fig. 11A, Fig. 12A, Fig. 13A and Fig. 14A.

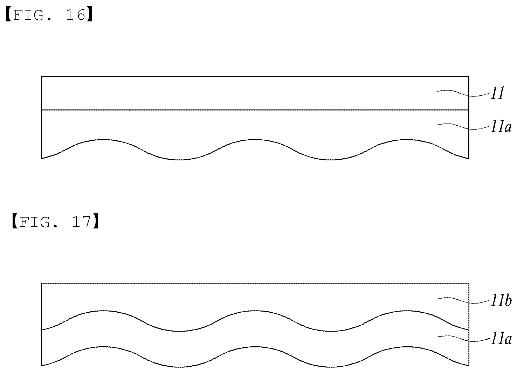

For the sake of convenience in explanation, Fig. 11A to Fig. 15B are illustrated in 90-degree increments, but the operation process of the coating roller 120 is performed continuously. Accordingly, as a result of repeatedly performing Fig. 11A to Fig. 15A, the coating layer 11a whose thickness continuously changes as illustrated in Fig. 16 may be formed. As the case may be, when the coating bar 121 presses even the separator substrate 11, the pattern of the coating layer 11a may be formed on a pattern 11b in which the thickness of the separator substrate 11 continuously changes, as illustrated in Fig. 17.

In the separator coating roller 120 (120-1 to 120-4) and the separator manufacturing device 10 including the same according to the above-described embodiments of the present disclosure, the coating layer of the separator of the secondary battery may be appropriately adjusted in the thickness thereof depending on an area, thereby optimizing the performance of and maintaining the safety of the secondary battery.

In the separator coating roller according to the embodiments of the present disclosure, the rotation speed of the coating bar 121 may be determined depending on the eccentricity of the coating bar 121.

For example, when the eccentricity of the coating bar 121 is large, vibration due to the rotation of the coating bar 121 that is greatly eccentric may occur significantly, and thus, the rotation speed of the coating bar 121 may be a first speed that is relatively small. Conversely, when the eccentricity of the coating bar 121 is small, vibration due to the rotation of the coating bar 121 that is slightly eccentric may be small, and thus, the rotation speed of the coating bar 121 may be a second speed that is larger than the first speed. The roller rotation speed of the substrate supply unit 12 that supplies the separator substrate 11 may also be varied in conjunction with the rotation speed of the coating bar 121. The relationship between the eccentricity of the coating bar 121 and the rotation speed of the coating bar 121 may be calculated in a statistical method through repeated experiments.

Also, in the separator coating roller according to the embodiments of the present disclosure, when the coating bar 121 rotates for one cycle, the rotation speed of the coating bar 121 may be determined depending on the thickness of the coating layer 11a. Specifically, in a period in which the thickness of the coating layer 11a is large, the rotation speed of the coating bar 121 may be decreased, and in a period in which the thickness of the coating layer 11a is small, the rotation speed of the coating bar 121 may be increased. Of course, since the thickness of the coating layer 11a changes continuously, the rotation speed of the coating bar 121 may be a sine curve that is inversely proportional to the thickness of the coating layer 11a.

For example, a sine curve may be obtained, in which the rotation speed of the coating bar 121 becomes maximum when forming the coating layer 11a1 of the first thickness that is minimum as in Fig. 11A and the rotation speed of the coating bar 121 becomes minimum when forming the coating layer 11a3 of the third thickness that is maximum as in Fig. 13A.

Although the embodiments of the present disclosure have been described, those of ordinary skill in the art will be able to modify and change the present disclosure in various ways by adding, changing or deleting components within the scope that does not depart from the spirit of the present disclosure described in the claims, and this will also be considered to be included within the scope of the rights of the present disclosure.

## Claims

1. A separator coating roller comprising:
a coating bar configured to coat a coating layer on a separator substrate; and
an eccentric section coupled to the coating bar, configured to rotate the coating bar, and configured to adjust an eccentricity of the coating bar.

2. The separator coating roller according to claim 1, wherein the eccentric section includes:
an eccentric housing located on opposing ends of the coating bar, the eccentric housing having a hollow structure and an insertion hole, the insertion hole being located on a circumferential outer surface of the eccentric housing and extending to a hollow space of the hollow structure, and
an adjustment bolt configured to be inserted into the insertion hole to an adjustable insertion depth, and
wherein the adjustment bolt is configured to limit a movement of the coating bar in the hollow space or eccentrically position the coating bar in the hollow space.

3. The separator coating roller according to claim 2, wherein the insertion hole includes at least two pairs of insertion holes, the insertion holes of each pair of insertion holes facing each other,
wherein the adjustment bolt includes first adjustment bolts being configured to limit the movement of the coating bar by the first adjustment bolts being inserted into a first pair of insertion holes of the at least two pairs of insertion holes, respectively, and
wherein the adjustment bolt further includes second adjustment bolts being configured to eccentrically position the coating bar by the second adjustment bolts being inserted into a second pair of insertion holes of the at least two pairs of insertion holes, respectively.

4. The separator coating roller according to claim 3, wherein the first adjustment bolts and the second adjustment bolts have threaded portions with different diameters from each other according to respective locations of the first pair of insertion holes and the second pair of insertion holes.

5. The separator coating roller according to claim 3, wherein the first adjustment bolts and the second adjustment bolts have different lengths according to respective locations of the first pair of insertion holes and the second pair of insertion holes.

6. The separator coating roller according to claim 2, wherein the insertion hole includes a pair of insertion holes facing each other,
wherein the eccentric section includes a pair of side support members protruding in the hollow space to face each other, the pair of side support members being configured to limit the movement of the coating bar, and
wherein the adjustment bolt includes a pair of adjustment bolts, the pair of adjustment bolts being configured to eccentrically position the coating bar upon insertion into the pair of insertion holes, respectively.

7. The separator coating roller according to claim 2, wherein the insertion hole includes a pair of insertion holes facing each other,
wherein the hollow space of the eccentric section includes eccentric guides, the eccentric guides being planar surfaces facing each other and configured to limit the movement of the coating bar to a straight direction in the hollow space, and
wherein the adjustment bolt includes a pair of adjustment bolts, the pair of adjustment bolts being configured to eccentrically position the coating bar upon insertion into the pair of insertion holes, respectively.

8. The separator coating roller according to claim 2, wherein the insertion hole includes a pair of insertion holes facing each other,
wherein the adjustment bolt is configured to eccentrically position the coating bar upon insertion into a first insertion hole of the pair of insertion holes, and
wherein a second insertion hole of the pair of insertion holes has a compression spring inserted therein, the compression spring being opposite to the adjustment bolt.

9. The separator coating roller according to claim 2, wherein the eccentric section includes:
a compression spring facing the insertion hole, and
a pair of side support members protruding in the hollow space, facing each other, and being configured to limit the movement of the coating bar, and
wherein the adjustment bolt is configured to eccentrically position the coating bar by being inserted into the insertion hole.

10. The separator coating roller according to claim 2, wherein the eccentric section includes a compression spring facing the insertion hole,
wherein the hollow space of the eccentric section includes eccentric guides, the eccentric guides being planar surfaces facing each other and being configured to limit the movement of the coating bar to a straight direction in the hollow space, and
wherein the adjustment bolt is configured to eccentrically position the coating bar by being inserted into the insertion hole.

11. The separator coating roller according to claim 2, wherein the coating bar includes a wear-preventing section located at a position configured to be contacted by the adjustment bolt.

12. A separator manufacturing device comprising:
a substrate supplier configured to supply a separator substrate;
a coating solution receiving section configured to receive a separator coating solution; and
a coating roller configured to coat a coating layer on the separator substrate by using the separator coating solution,
the coating roller comprising:
a coating bar located along a width direction of the separator substrate, the coating bar being configured to apply the separator coating solution to the separator substrate, and
an eccentric section coupled to the coating bar, configured to rotate the coating bar, and configured to adjust an eccentricity of the coating bar.

13. The separator manufacturing device according to claim 12, wherein the eccentric section includes
an eccentric housing located on opposing sides of the eccentric section in the width direction of the separator substrate, the eccentric housing having a hollow structure and an insertion hole, the insertion hole being located on a circumferential outer surface of the eccentric housing and extending to a hollow space of the hollow structure, and
an adjustment bolt configured to be inserted into the insertion hole to an adjustable insertion depth, and
wherein the adjustment bolt is configured to limit a movement of the coating bar in the hollow space or eccentrically position the coating bar in the hollow space.

14. The separator manufacturing device according to claim 12, further including kiss rollers installed in front of and behind, respectively, the coating roller, the kiss rollers being configured to press the separator substrate toward the coating roller.

15. The separator manufacturing device according to claim 12, wherein a rotation speed of the coating bar is determined depending on the eccentricity of the coating bar.

16. The separator manufacturing device according to claim 15, wherein, when the coating bar rotates for one cycle, the rotation speed of the coating bar is determined depending on a thickness of the coating layer.

17. The separator manufacturing device according to claim 15, wherein the substrate supplier includes a roller, the roller having a rotation speed configured to be variable in conjunction with the rotation speed of the coating bar.

18. The separator manufacturing device according to claim 12, wherein the coating roller is located on upper and lower surfaces of the separator substrate to form the coating layer on both the upper and lower surfaces of the separator substrate.

19. The separator manufacturing device according to claim 12, wherein the coating bar has a cylindrical shape, and
wherein the coating bar is supplied with the separator coating solution on a circumferential outer surface of the coating bar, the coating bar being configured to apply the separator coating solution to the separator substrate.

20. The separator manufacturing device according to claim 13, wherein the coating solution receiving section includes a discharge port configured to continuously supply and discharge the separator coating solution, and
wherein the discharge port has a diameter larger than a maximum eccentric diameter of the coating bar.
